(19) **Europäisches Patentamt / European Patent Office / Office européen des brevets**

(11) **EP 4 156 341 A1**

(12) # EUROPEAN PATENT APPLICATION
published in accordance with Art. 153(4) EPC

(43) Date of publication:
**29.03.2023 Bulletin 2023/13**

(21) Application number: **21868116.1**

(22) Date of filing: **10.05.2021**

(51) International Patent Classification (IPC):
**H01M 4/583** (2010.01)    **C01B 32/20** (2017.01)

(52) Cooperative Patent Classification (CPC):
**Y02E 60/10**

(86) International application number:
**PCT/CN2021/092566**

(87) International publication number:
**WO 2022/057278 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.09.2020 CN 202010992949**

(71) Applicant: **Jiangsu Zenergy Battery Technologies Co., Ltd.**
**Suzhou City, Jiangsu 215500 (CN)**

(72) Inventors:
• **ZHANG, Hao**
  **Dongguan, Guangdong 523000 (CN)**

• **ZHANG, Chuanjian**
  **Dongguan, Guangdong 523000 (CN)**
• **LIU, Jiao**
  **Dongguan, Guangdong 523000 (CN)**
• **TANG, Wen**
  **Dongguan, Guangdong 523000 (CN)**
• **JIANG, Kecheng**
  **Dongguan, Guangdong 523000 (CN)**
• **YAO, Yi**
  **Dongguan, Guangdong 523000 (CN)**

(74) Representative: **Vitina, Maruta et al**
**Agency TRIA ROBIT**
**P.O. Box 22**
**1010 Riga (LV)**

(54) ## FAST-CHARGING GRAPHITE AND BATTERY

(57) Disclosed are a fast-charging graphite and a battery. The graphite has a graphitization degree of 90-97% and a lithium-ion diffusion coefficient of $2.3 \times 10^{-14}$ - $8.7 \times 10^{-12}$ cm$^2$/s at 25°C and a state of charge (SOC) of 10%. The battery includes a cathode plate, an anode plate, a separator arranged between the cathode plate and the anode plate, and an electrolyte. The anode plate includes an anode current collector and an anode coating coated on at least one side of the anode current collector. The anode coating includes an anode active material, and the anode active material includes the fast-charging graphite. Compared with the prior art, the graphite has good fast charging performance, and the battery made with the graphite has excellent dynamic performance, charging ability, and cycle life.

**Description**

This application claims the benefit of priority from Chinese Patent Application No. 202010992949.X, filed on September 21, 2020 and titled "FAST-CHARGING GRAPHITE AND BATTERY. The content of the aforementioned application, including any intervening amendments thereto, is incorporated herein by reference in its entirety.

**TECHNICAL FIELD**

This application relates to lithium-ion batteries, and more particularly to a fast-charging graphite and a battery.

**BACKGROUND**

With the continuous upgrading of material development and cell manufacturing, the energy density of power batteries has increased significantly, with the range increasing from 150 km to 400 km for mainstream mass-produced passenger cars, which can meet the range requirements of consumers. However, the charging rate of the power battery still remains to be enhanced.

During the fast-charging process, lithium ions need to be embedded in the layered graphite anode quickly. If the graphite has poor kinetics, the lithium ions cannot be fully embedded in the graphite bulk phase to form $Li_xC$ compound, and will precipitate on the surface of the pole piece to form lithium dendrites, thus affecting the cycle stability and safety of the cell. Therefore, the solid phase diffusion of lithium ions in graphite materials is considered the determining step in the overall electrode reaction, and directly affects the charging rate of the battery. Consequently, in order to accelerate the charging of electric vehicles, it is required to develop high-performance fast-charging graphite materials to improve the diffusion kinetics of the graphite cathodes.

At present, the researches on fast-charging graphite mainly focus on surface coating and orientation index (OI). For example, Chinese Patent Publication No. 106981632A discloses a method for improving the charging capacity of anode materials, in which petroleum coke or asphalt coke with smaller particle size is crushed to shorten the lithium-ion migration path; high-temperature graphitization treatment is conducted to improve the discharge capacity and efficiency of the anode material; and carbon coating and granulation are performed to overcome graphite anisotropy caused by the high-temperature graphitization treatment. Chinese Patent Publication No. 108832075A selects a graphite anode with fast charging capability by studying the OI values of the cathode and anode pieces.

However, it has been rarely investigated about properties associated with graphite diffusion kinetics, such as graphitization degree (g) and lithium-ion diffusion coefficient (D). The graphitization degree refers to the proportion of the carbonaceous material that reaches the complete graphite crystal structure, and the higher the graphitization degree, the closer the carbonaceous material is to the complete graphite crystal, which is not conductive to the rapid intercalation and de-intercalation of lithium ions. Moreover, the diffusion of lithium ions in the active electrode material is a limiting factor for the electrochemical reactions in the lithium-ion battery. Therefore, the lithium-ion diffusion coefficient is considered important for the optimization of the charge rate of the lithium-ion battery.

Given this, it is necessary to develop a fast-charging graphite based on researches about physical properties of materials to meet the performance requirements of advanced lithium-ion batteries.

**SUMMARY**

A first objective of this application is to provide a graphite material having a great fast-charging performance.

A second objective of this application is to provide a battery with the graphite as an anode active material, which exhibits excellent kinetic performance, charging capability and cycle performance.

The technical solutions of the disclosure are described below.

In a first aspect, the disclosure provides a fast-charging graphite, wherein a graphitization degree of the fast-charging graphite is 90-97%; and a lithium-ion diffusion coefficient of the fast-charging graphite at 25°C and a state of charge (SOC) of 10% is $2.3 \times 10^{-14}$ - $8.7 \times 10^{-12}$ cm$^2$/s.

In an embodiment, the graphitization degree of the fast-charging graphite is 92%-94%.

In an embodiment, the lithium-ion diffusion coefficient of the fast-charging graphite at 25°C and a SOC of 10% is $7.6 \times 10^{-13}$ - $6 \times 10^{-12}$ cm$^2$/s.

In an embodiment, a particle size $D_{50}$ of the fast-charging graphite is 1-20 $\mu$m.

In an embodiment, the fast-charging graphite is selected from the group consisting of an artificial graphite, a natural graphite, a modified graphite, and a combination thereof.

In a second aspect, the present disclosure battery, comprising:

a cathode plate;

an anode plate;
a separator arranged between the cathode plate and the anode plate; and
an electrolyte;
wherein the anode plate comprises an anode current collector and an anode coating coated on at least one side of the anode current collector; the anode coating comprises an anode active material; and the anode active material comprises the aforementioned graphite.

In an embodiment, the anode active material further comprises at least one of a hard carbon, a soft carbon, a silicon-carbon composite, and a silicon-oxygen composite.

In an embodiment, the cathode plate comprises a cathode current collector and a cathode coating coated on at least one side of the cathode current collector; the cathode coating comprises a cathode active material; and the cathode active material comprises at least one of $LiFePO_4$ and $Li_aNi_xCo_yM_{1-x-y}O_2$, wherein $0.95 \leq a \leq 1.2$; $0 < x < 1$; $0 < y < 1$; $0 < x+y < 1$; and M is aluminum and/or manganese.

In an embodiment, the anode current collector is selected from the group consisting of a copper foil, carbon paper, a copper-coated polymer film and a combination thereof.

In an embodiment, the cathode current collector is selected from the group consisting of an aluminum foil, a nickel foil, an aluminum-coated polymer film and a combination thereof an aluminum foil, a nickel foil, and an aluminum-coated polymer film.

This application at least has the following beneficial effects compared with the prior art.

(1) By reasonably designing the graphitization degree and the lithium-ion diffusion coefficient, the graphite provided herein has a desired interlayer spacing, which can facilitate the rapid intercalation and de-intercalation of lithium ions, allowing for excellent fast-charging capability and high capacity and stability.
(2) This application also provides a battery with the fast-charging graphite provided herein as an anode active material, which exhibits excellent kinetic performance, charging performance and cycle stability.

## DETAILED DESCRIPTION OF EMBODIMENTS

The present application will be described in detail below.

1. Fast-charging graphite

This application provides a graphite, with a graphitization degree g of 90-97% and a lithium-ion diffusion coefficient $D$ of $2.3 \times 10^{-14}$ - $8.7 \times 10^{-12}$ cm$^2$/s at 25°C and a state of charge (SOC) of 10%.

The graphitization degree can be measured by X-Ray Diffraction (XRD). Specifically, the interplanar spacing in the XRD pattern of the crystal plane of the graphite (002) is obtained through calibration based on the position of the diffraction peak of the crystal plane of the Si standard sample (111), and plugged into the following formula to calculate the graphitization degree:

$$g = \frac{0.344 - d(002)}{0.0086};$$

$$d(002) = \frac{\lambda}{2\sin\left\{\dfrac{2\theta_c - \left[(2\theta_{Si}) - 28.466\right]}{2}\right\}}$$

where ; the interplanar spacing of the graphite (002) is calibrated by using the Si sample; $\theta_c$ represents a diffraction angle of the crystal plane of the graphite (002); $\theta_{Si}$ represents a diffraction angle of the crystal plane of the Si sample (111); and $\lambda$ is the average wavelength of coppers $K\alpha_1$ and $K\alpha_2$, and $\lambda = 0.15418$ nm.

The lithium-ion diffusion coefficient $D$ can be obtained by the galvanostatic intermittent titration technique (GITT). Specifically, graphite is made into a pole plate to be subjected to the GITT test in a button cell. The button cell is allowed to stand for 10 h, titrated at a constant current of 0.1 C for 10 min, and subjected to another standing for 10 h to allow the current to be stable. The lithium-ion diffusion coefficient $D$, at 25 °C and SOC of 10%, is calculated by the following formula:

$$D = \frac{4}{\pi\tau} \times \left(\frac{mV_m}{MA}\right)^2 \times \left(\frac{\Delta E_s}{\Delta E_\tau}\right)^2 ;$$

where $D$ represents the diffusion coefficient; $\tau$ is the pulse time; $m$, $V_m$, and $M$ are the weight, molar volume, and molar weight of the active material, respectively; $A$ is the area of the electrode material; and $\Delta E_s$ and $\Delta E_\tau$ are the voltage changes during the chilling and pulse phases, respectively.

The graphitization degree g of the fast-charging graphite provided herein is preferably 92-94%. If the graphitization degree is too low, the interlayer spacing of the fast-charging graphite is large, resulting in a loose structure, a low capacity, and a poor cycling stability. If the graphitization degree is too high, the interlayer spacing of the fast-charging graphite is small, which is not conducive to the rapid intercalation and de-intercalation of lithium ions.

The fast-charging graphite provided herein has a particle size $D_{50}$ of 1-20 $\mu$m.

The fast-charging graphite provided herein is selected from the group consisting of an artificial graphite, a natural graphite, a modified graphite, and a combination thereof.

This application also provides a battery, which includes a cathode plate, an anode plate, a separator arranged between the cathode plate and the anode plate, and an electrolyte. The anode plate includes an anode current collector and an anode coating coated on at least one side of the anode current collector. The anode coating layer includes an anode active material. The anode active material includes the aforementioned fast-charging graphite.

In an embodiment, the anode active material further includes at least one of hard carbon, soft carbon, a silicon-carbon composite, and a silicon-oxygen composite.

In an embodiment, the cathode plate includes a cathode current collector and a cathode coating layer coated on at least one side of the cathode current collector. The cathode coating layer includes a cathode active material. The cathode active material includes at least one of $LiFePO_4$ and $Li_aNi_xCo_yM_{1-x-y}O_2$, where $0.95 \leq a \leq 1.2$; $0 < x < 1$; $0 < y < 1$; $0 < x+y < 1$; and M is aluminum and/or manganese.

In an embodiment, the anode current collector is selecting from the group consisting of a copper foil, carbon paper, a copper-coated polymer film, and a combination thereof, preferably, copper foil.

In an embodiment, the cathode current collector is selecting from the group consisting of an aluminum foil, a nickel foil, and an aluminum-coated polymer, preferably, aluminum foil.

In an embodiment, both anode coating and cathode coating further includes a binder and a conductive agent, the type and proportion of which are determined according to actual requirements.

In an embodiment, the specific type and composition of the electrolyte and the separator are not specifically limited and can be selected according to the actual requirements.

The present disclosure will be further described below with reference to the following embodiments. It should be understood that these embodiments are only illustrative of the present disclosure and not intended to limit the scope of the present disclosure.

**Example 1**

Preparation of an anode plate

A fast-charging graphite, an aqueous dispersion of acrylonitrile multi-copolymer binder (LA133), sodium carboxymethyl cellulose (CMC) and Super P conductive carbon black (SP) were mixed in a weight ratio of 96.2:1.5:1.5:0.8, and dispersed in water to produce an anode slurry. The anode slurry was then coated on a copper foil, dried and cold pressed to a compacted density of 1.65 g/cc. The graphite had a graphitization degree $g$ of 92.3% and a lithium-ion diffusion coefficient $D$ of $6 \times 10^{-12}$ cm$^2$/s at 25°C and 10% SOC.

Preparation of a cathode plate

Nickel cobalt manganese oxide (NCM523, as the cathode active material), a polyvinylidene fluoride (PVDF) binder, Super P conductive carbon black (SP), and carbon nanotubes (CNT) were mixed in a weight ratio of 97.8:0.9:0.8:0.5, and dispersed in N-methylpyrrolidone (NMP) to prepare a cathode slurry. The cathode slurry was then coated on an aluminum foil, dried and cold pressed to a compacted density of 3.4 g/cc.

The anode plate, the cathode plate and a polyethylene separator arranged therebetween were assembled into a cell, which was injected with an electrolyte, and subjected to formation and capacity grading to obtain a battery.

**Example 2**

This example was different from Example 1 merely in the fast-charging graphite. In this example, the fast-charging graphite had a graphitization degree $g$ of 93.1% and a lithium-ion diffusion coefficient $D$ of $4.6\times10^{-12}$ cm$^2$/s at 25°C and 10% SOC.

**Example 3**

This example was different from Example 1 merely in the fast-charging graphite. In this example, the fast-charging graphite had a graphitization degree $g$ of 94.2% and a lithium-ion diffusion coefficient $D$ of $8.6\times10^{-13}$ cm$^2$/s at 25°C and 10% SOC.

**Example 4**

This example was different from Example 1 merely in the fast-charging graphite. In this example, the fast-charging graphite had a graphitization degree $g$ of 90.5% and a lithium-ion diffusion coefficient $D$ of $8.3\times10^{-13}$ cm$^2$/s at 25°C and 10% SOC.

**Example 5**

This example was different from Example 1 merely in the fast-charging graphite. In this example, the fast-charging graphite had a graphitization degree $g$ of 96% and a lithium-ion diffusion coefficient $D$ of $6.1\times10^{-14}$ cm$^2$/s at 25°C and 10% SOC.

**Example 6**

This example was different from Example 1 merely in the composition of the anode slurry. In this example, the anode slurry further included hard carbon.

**Example 7**

This example was different from Example 1 merely in the composition of the anode slurry. In this example, the anode slurry further included a silicon-carbon composite.

**Example 8**

This example was different from Example 1 merely in the composition of the anode slurry. In this example, the anode slurry further included a silicon-oxygen composite.

**Comparative Example 1**

This example was different from Example 1 merely in the fast-charging graphite. In this example, the fast-charging graphite had a graphitization degree $g$ of 98.7% and a lithium-ion diffusion coefficient $D$ of $6.1\times10^{-14}$ cm$^2$/s at 25°C and 10% SOC.

**Comparative Example 2**

This example was different from Example 1 merely in the fast-charging graphite. In this example, the fast-charging graphite had a graphitization degree $g$ of 96.6% and a lithium-ion diffusion coefficient $D$ of $9.6\times10^{-12}$ cm$^2$/s at 25°C and 10% SOC.

**Comparative Example 3**

This example was different from Example 1 merely in the fast-charging graphite. In this example, the fast-charging graphite had a graphitization degree $g$ of 88% and a lithium-ion diffusion coefficient $D$ of $1.2\times10^{-14}$ cm$^2$/s at 25°C and 10% SOC.

**Comparative Example 4**

This example was different from Example 1 merely in the graphitization degree of the fast-charging graphite, which was 88% in this example.

**Comparative Example 5**

This example was different from Example 1 merely in the graphitization degree of the fast-charging graphite, which was 98% in this example.

**Comparative Example 6**

This example was different from Example 1 merely in the lithium-ion diffusion coefficient $D$ of the fast-charging graphite at 25°C and 10% SOC, which was $2.2\times10^{-14}$ cm$^2$/s in this example.

**Comparative Example 7**

This example was different from Example 1 merely in the lithium-ion diffusion coefficient $D$ of the fast-charging graphite at 25°C and 10% SOC, which was $8.8\times10^{-12}$ cm$^2$/s in this example.

**Performance test**

Electrochemical tests were performed on lithium-ion batteries obtained in Examples 1-8 and the Comparative Examples 1-7.

(1) Charging performance test

At 25°C, a battery sample was charged to 100% SOC at 5C current and then discharged to 0% SOC at 1C current. After ten charge-discharge cycles, the battery sample was then charged to 100% SOC at 5C current, and disassembled to observe the state of the anode plate, so as to determine the kinetic performance of the battery based on the lithium precipitation area. A larger lithium precipitation area indicated poor kinetics characteristic and charging capability, and a smaller lithium precipitation area indicated better kinetics characteristic and charging capability.

(2) Cycle stability test

The battery sample was charged to 100% SOC at 3C current and discharged to 0% SOC at 1C current, and cycled until its capacity decayed to 80% of the initial capacity. The number of cycles was recorded, and the larger the number of cycles, the better the cycle stability.

**Table 1** Test results of lithium-ion batteries obtained in Examples 1-8 and the Comparative Examples 1-7

| Batteries | Anode active material | Graphitization degree (%) | Diffusion coefficient (cm$^2$/s) | Lithium precipitation area (%) | The number of cycles |
|---|---|---|---|---|---|
| Example 1 | Fast-charging graphite 1 | 92.3 | $6\times10^{-12}$ | 2 | 1880 |
| Example 2 | Fast-charging graphite 2 | 93.1 | $4.6\times10^{-12}$ | 2.8 | 1670 |
| Example 3 | Fast-charging graphite 3 | 94.2 | $8.6\times10^{-13}$ | 3 | 1550 |
| Example 4 | Fast-charging graphite 4 | 90.5 | $8.3\times10^{-13}$ | 4 | 1490 |
| Example 5 | Fast-charging graphite 5 | 96 | $6.1\times10^{-14}$ | 6 | 1430 |
| Example 6 | Fast-charging graphite 1/hard carbon | 92.3 | $6\times10^{-12}$ | 2.2 | 1810 |
| Example 7 | Fast-charging graphite 1/silicon-carbon composite | 92.3 | $6\times10^{-12}$ | 2.1 | 1830 |

(continued)

| Batteries | Anode active material | Graphitization degree (%) | Diffusion coefficient (cm$^2$/s) | Lithium precipitation area (%) | The number of cycles |
|---|---|---|---|---|---|
| Example 8 | Fast-charging graphite 1/silicon-oxygen composite | 92.3 | $6\times10^{-12}$ | 2.3 | 1790 |
| Comparative Example 1 | Comparative graphite 1 | 98.7 | $6.1\times10^{-14}$ | 8 | 1250 |
| Comparative Example 2 | Comparative graphite 2 | 96.6 | $9.6\times10^{-12}$ | 8 | 1200 |
| Comparative Example 3 | Comparative graphite 3 | 88 | $1.2\times10^{-14}$ | 11 | 830 |
| Comparative Example 4 | Comparative graphite 4 | 88 | $6\times10^{-12}$ | 6.8 | 910 |
| Comparative Example 5 | Comparative graphite 5 | 98 | $6\times10^{-12}$ | 8.5 | 1380 |
| Comparative Example 6 | Comparative graphite 6 | 92.3 | $2.2\times10^{-14}$ | 9.2 | 1350 |
| Comparative Example 7 | Comparative graphite 7 | 92.3 | $8.8\times10^{-12}$ | 7.1 | 1140 |

It could be seen from Table 1 that the battery with the fast-charging graphite provided herein as the anode active material had a small lithium-precipitation area and slow capacity decay, indicating that the battery made with the fast-charging graphite provided herein had better kinetics, good charging capacity, and better cycling stability. Either the graphitization degree or the diffusion coefficient was too high or too low, the graphite had poor performance. In other words, only when both the graphitization degree and the diffusion coefficient of the fast-charging graphite were controlled within the limitations of this application, the battery could show good kinetics, charging capacity, and cycling stability. In particular, when the fast-charging graphite had a graphitization degree of 92.3% and a diffusion coefficient of $6\times10^{-12}$ cm$^2$/s, the fabricated battery had the smallest lithium-precipitation area and the largest cycle number, namely, the best kinetic performance, charging capacity, and cycling stability. The reasons were described below. (1) When the graphitization degree was too low, the layer spacing of the graphite was large, resulting in a loose structure, a low capacity, and a poor cycling stability. When the graphitization degree was too high, the layer spacing of the graphite was small, which was not conducive to the rapid intercalation and de-intercalation of lithium ions. (2) When the diffusion coefficient was too low, the lithium-ion diffusion rate of the graphite was affected, while when the diffusion coefficient was too high, the layer spacing of the graphite was large, resulting in a lower capacity. Therefore, this application controlled both the graphitization degree and diffusion coefficient of the fast-charging graphite within a reasonable range to ensure that the graphite had good fast-charging performance, while the lithium-ion battery made with this graphite had both excellent cycle life and kinetic performance.

Though the embodiments have been described in detail above, changes and modifications can still be made thereto by those skilled in the art. The above-mentioned embodiments are merely illustrative and not intended to limit the disclosure. It should be understood that those modifications, replacements, and variations made by those skilled in the art based on the content disclosed herein without paying creative effort shall fall within the scope of the present disclosure defined by the appended claims. Furthermore, specific terms used herein are merely for the convenience of description and are not intended to limit the present disclosure.

**Claims**

1. A fast-charging graphite, **characterized in that** a graphitization degree of the fast-charging graphite is 90-97%; and a lithium-ion diffusion coefficient of the fast-charging graphite at 25°C and a state of charge (SOC) of 10% is $2.3\times10^{-14}$ - $8.7\times10^{-12}$ cm$^2$/s.

2. The fast-charging graphite according to claim 1, **characterized in that** the graphitization degree of the fast-charging graphite is 92%-94%.

3. The fast-charging graphite according to claim 1, **characterized in that** the lithium-ion diffusion coefficient of the fast-charging graphite at 25°C and a SOC of 10% is $7.6 \times 10^{-13}$ - $6 \times 10^{-12}$ cm$^2$/s.

4. The fast-charging graphite according to claim 1, **characterized in that** a particle size $D_{50}$ of the fast-charging graphite is 1-20 $\mu$m.

5. The fast-charging graphite according to claim 1, **characterized in that** the fast-charging graphite is selected from the group consisting of an artificial graphite, a natural graphite, a modified graphite, and a combination thereof.

6. A battery, comprising:

   a cathode plate;
   an anode plate;
   a separator arranged between the cathode plate and the anode plate; and
   an electrolyte;
   **characterized in that** the anode plate comprises an anode current collector and an anode coating coated on at least one side of the anode current collector; the anode coating comprises an anode active material; and the anode active material comprises the fast-charging graphite according to any one of claims 1-5.

7. The battery according to claim 6, **characterized in that** the anode active material further comprises at least one of hard carbon, soft carbon, a silicon-carbon composite, and a silicon-oxygen composite.

8. The battery according to claim 6, **characterized in that** the cathode plate comprises a cathode current collector and a cathode coating coated on at least one side of the cathode current collector; the cathode coating comprises a cathode active material; and the cathode active material comprises at least one of $LiFePO_4$ and $Li_aNi_xCo_yM_{1-x-y}O_2$, wherein $0.95 \leq a \leq 1.2$; $0 < x < 1$; $0 < y < 1$; $0 < x+y < 1$; and M is aluminum and/or manganese.

9. The battery according to claim 6, **characterized in that** the anode current collector is selected from the group consisting of a copper foil, carbon paper, a copper-coated polymer film and a combination thereof.

10. The battery according to claim 8, **characterized in that** the cathode current collector is selected from the group consisting of an aluminum foil, a nickel foil, an aluminum-coated polymer film and a combination thereof.

## INTERNATIONAL SEARCH REPORT

| International application No. |
| --- |
| **PCT/CN2021/092566** |

| **A.** | **CLASSIFICATION OF SUBJECT MATTER** |
| --- | --- |
| | H01M 4/583(2010.01)i;  C01B 32/20(2017.01)i |

According to International Patent Classification (IPC) or to both national classification and IPC

| **B.** | **FIELDS SEARCHED** |
| --- | --- |

Minimum documentation searched (classification system followed by classification symbols)

H01M; C01B

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI: 石墨, 石墨化, 扩散系数, 层间距, 恒电流间歇滴定, graphite, graphitization, diffusion coefficient, layer spacing, galvanostatic intermittent titration technique, GITT

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| PX | CN 112151796 A (JIANGSU TAFEL NEW ENERGY TECHNOLOGY CO., LTD. et al.) 29 December 2020 (2020-12-29)<br>    description paragraphs 7-112 | 1-10 |
| X | CN 109962235 A (NINGDE CONTEMPORARY AMPEREX TECHNOLOGY CO., LTD.) 02 July 2019 (2019-07-02)<br>    description paragraphs 6-71 | 1-10 |
| X | CN 101841019 A (HUNAN UNIVERSITY) 22 September 2010 (2010-09-22)<br>    description, paragraphs 2-70 | 1-10 |
| X | A. V. Ivanishchev et al. "Impedance Spectroscopy of Lithium-Carbon Electrodes"<br>*Russian Journal of Electrochemistry,* Vol. 44, No. 5, 31 May 2008 (2008-05-31),<br>ISSN: 1023-1935,<br>    page 513, left-hand column, paragraph 4 to page 521, right-hand column, paragraph 1 | 1-10 |
| A | CN 109254036 A (SHANGHAI SHANSHAN TECH CO., LTD.) 22 January 2019 (2019-01-22)<br>    entire document | 1-10 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 July 2021** | **11 August 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/092566** |

**C.** **DOCUMENTS CONSIDERED TO BE RELEVANT**

| Category* | Citation of document, with indication, where appropriate, of the relevant passages | Relevant to claim No. |
|---|---|---|
| A | Ping Yu et al. "Determination of the Lithium Ion Diffusion Coefficient in Graphite" *Journal of The Electrochemical Society*, Vol. 146, No. 1, 31 January 1999 (1999-01-31), ISSN: 0013-4651, entire document | 1-10 |
| A | A.V. Churikov et al. "Application of pulse methods to the determination of the electrochemical characteristics of lithium intercalates" *Electrochimica Acta*, Vol. 48, No. 24, 30 October 2003 (2003-10-30), ISSN: 0013-4686, entire document | 1-10 |
| A | Norio Takami et al. "Structural and Kinetic Characterization of Lithium Intercalation into Carbon Anodes for Secondary Lithium Batteries" *Journal of The Electrochemical Society*, Vol. 142, No. 2, 28 February 1995 (1995-02-28), ISSN: 0013-4651, entire document | 1-10 |
| A | WO 2020181244 A1 (UNIVERSITY OF MARYLAND, COLLEGE PARK) 10 September 2020 (2020-09-10) entire document | 1-10 |

Form PCT/ISA/210 (second sheet) (January 2015)

### INTERNATIONAL SEARCH REPORT
#### Information on patent family members

International application No.

**PCT/CN2021/092566**

| Patent document cited in search report | | | Publication date (day/month/year) | Patent family member(s) | | | Publication date (day/month/year) |
|---|---|---|---|---|---|---|---|
| CN | 112151796 | A | 29 December 2020 | None | | | |
| CN | 109962235 | A | 02 July 2019 | EP | 3561927 | A1 | 30 October 2019 |
| | | | | CN | 109962235 | B | 17 July 2020 |
| | | | | US | 2019334160 | A1 | 31 October 2019 |
| | | | | CN | 108807959 | B | 23 April 2019 |
| | | | | CN | 109962236 | A | 02 July 2019 |
| | | | | CN | 109962236 | B | 17 July 2020 |
| | | | | CN | 108807959 | A | 13 November 2018 |
| CN | 101841019 | A | 22 September 2010 | None | | | |
| CN | 109254036 | A | 22 January 2019 | None | | | |
| WO | 2020181244 | A1 | 10 September 2020 | None | | | |

Form PCT/ISA/210 (patent family annex) (January 2015)

**REFERENCES CITED IN THE DESCRIPTION**

**Patent documents cited in the description**

- CN 202010992949X
- CN 106981632 A
- CN 108832075 A